# EUROPÄISCHE PATENTSCHRIFT

(11) **EP 4 218 388 B1**
(45) Veröffentlichungstag und Bekanntmachung des Hinweises auf die Patenterteilung: **01.01.2025**
(21) Anmeldenummer: 22205336.5
(22) Anmeldetag: 03.11.2022
(51) Int. Cl.: A01D 17/06

(54) **WALZE FÜR EINE LANDWIRTSCHAFTLICHE FÖRDERVORRICHTUNG, FÖRDERVORRICHTUNG UND LANDWIRTSCHAFTLICHE ARBEITSMASCHINE**
ROLLER FOR AN AGRICULTURAL CONVEYOR DEVICE, CONVEYOR DEVICE AND AGRICULTURAL MACHINE
ROULEAU POUR UN DISPOSITIF DE TRANSPORT AGRICOLE, DISPOSITIF DE TRANSPORT ET MACHINE DE TRAVAIL AGRICOLE

(30) Priorität: 04.11.2021 DE 202021106050 U
(43) Veröffentlichungstag der Anmeldung: 02.08.2023
(73) Patentinhaber: Grimme Landmaschinenfabrik GmbH & Co. KG, 49401 Damme (DE)
(72) Erfinder: Müller, Fokke, 49356 Diepholz (DE); Meyer, Johannes, 49377 Vechta (DE)
(74) Vertreter: Wischmeyer, André

(56) Entgegenhaltungen:
- EP-A1- 0 018 194
- US-A1- 2008 120 957
- US-A1- 2016 227 703
- US-B1- 9 387 516
- US-B2- 7 261 209

## Beschreibung

Die vorliegende Erfindung betrifft eine Walze für eine landwirtschaftliche Fördervorrichtung für Erntegut, insbesondere für Hackfrüchte, wobei die Walze einen längsgestreckten Walzenkörper aufweist, dessen Längsmittelachse im Betrieb einer Rotationsachse der Walze entspricht. Des Weiteren umfasst die Walze ein relativ zum Walzenkörper lösbar festgelegtes Arbeitswerkzeug zur Einwirkung auf das Erntegut. Eine gattungsgemäße Fördervorrichtung umfasst mehrere vorbeschriebene Walzen. Entsprechend umfasst eine gattungsgemäße landwirtschaftliche Arbeitsmaschine, insbesondere ein Kartoffel- oder Rübenroder, eine solche Fördervorrichtung, die auch als Trennvorrichtung oder Überleitvorrichtung zum Trennen des Ernteguts von Beimengen und/oder zum Weiterleiten des über eine Aufnahme aufgenommenen Erntegutes hin zu weiteren funktionalen Elementen einer Arbeitsmaschine.

Eine Vorrichtung aus dem Stand der Technik ist mit Arbeitswerkzeugen versehen, die entweder für eine bestimmte Erntebedingung umfassend beispielsweise Bodenfeuchtigkeit und -beschaffenheit optimiert sind oder die für eine Vielzahl solcher Bedingungen kompromissbehaftet ausgelegt sind. Sofern sich die Erntebedingungen inklusive der Bodenfeuchtigkeiten ändern, kann es mitunter sinnvoll oder sogar notwendig sein, andere Arbeitswerkzeuge bzw. andere Konfigurationen von Arbeitswerkzeugen auf einer Walze oder einer Fördervorrichtung zu realisieren oder eine für verschiedene Arbeitsbedingungen ausgelegte Walze fördert und/oder reinigt suboptimal.

Ein Gegenstand nach dem Stand der Technik ist beispielsweise der EP 3 064 283 A2 zu entnehmen. Für die dort beschriebene Anpassung unterschiedlicher Hackfruchternter an das jeweilige Erntegut ist eine jeweilige Walze komplett aus der Fördervorrichtung zu entfernen, woraufhin die einzelnen Walzensegmente abgenommen und ersetzt werden können.

Aus der EP 3 473 079 B1 ist bekannt, einzelne Arbeitswerkzeuge einer Walze austauschbar zu gestalten.

Die US 7,261,209 B2 offenbart eine modulare Walze zur Verwendung in Materialtrennungseinheiten. Die Walze weist eine im Querschnitt rechteckige Welle auf, an der innenliegende Schalen angeordnet sind. Diese bilden einen Walzenkörper aus. Die die Arbeitswerkzeuge aufweisenden Halbschalen werden auf dem Walzenkörper lösbar festgelegt.

Es ist Aufgabe der vorliegenden Erfindung, die Anpassbarkeit einer Walze, einer Fördervorrichtung mit einer solchen Walze sowie einer landwirtschaftlichen Arbeitsmaschine an unterschiedliche Erntebedingungen zu verbessern.

Die Aufgabe wird gelöst durch einen Gegenstand gemäß Anspruch 1, einen Gegenstand gemäß Anspruch 16 sowie durch einen Gegenstand gemäß Anspruch 17.

Erfindungsgemäß ist vorgesehen, dass die Arbeitswerkzeuge auf zumindest zwei den Walzenkörper in Umfangsrichtung bedeckenden und aufeinanderfolgenden Teilschalen angeordnet sind, die über zumindest ein Befestigungsmittel lösbar am Walzenkörper festgelegt sind. Durch die Trennung der die Arbeitswerkzeuge aufweisenden Schale bzw. Bedeckung des Walzenkörpers einer Walze in Teilschalen in Umfangsrichtung müssen diese nicht aus einem zugehörigen Rahmen einer landwirtschaftlichen Fördervorrichtung ausgebaut werden. Der Walzenkörper, der zur Verbindung der Walze mit einem Rahmen und einem Antriebsorgan vorgesehen ist, kann im Rahmen verbleiben, was einen Austausch insbesondere während des Betriebs auf dem Feld ermöglicht. Es können auf einen Schlag mehrere auf einer Teilschale angeordnete Arbeitswerkzeuge durch einen Ersatz einer jeweiligen Teilschale ausgetauscht werden. Ein solcher Austausch während des Betriebs auf dem Feld vermeidet Stillstandszeiten. Gleichzeitig können Verschmutzungen der Lager dadurch vermieden werden, dass diese nicht gelöst und ggf. ausgebaut werden müssen.

Als Arbeitswerkzeuge sind insbesondere Mitnahmerippen oder stegartige Erhöhungen der Teilschale zu verstehen. Diese dienen einerseits zum Abtrennen von Beimengen, welche am Erntegut anhaften, sowie zur Beschleunigung und zum Weitertransport des Ernteguts, insbesondere Hackfrüchte oder Kartoffeln. Die Arbeitswerkzeuge sind insbesondere fest und unlösbarer Teil der Teilschale und insbesondere einstückig mit dem Rest der Teilschale ausgebildet.

Die Befestigungsmittel zur Festlegung einer jeweiligen Teilschale am Walzenkörper können ein- oder mehrteilig ausgebildet sein. Beispielsweise stellt bei einer Verschraubung der Teilschalen an dem Walzenkörper die Schraube inkl. etwaiger Schraubenmuttern das Befestigungsmittel dar.

Der Walzenkörper ist insbesondere im Bereich der Teilschalen mit einer zumindest im Wesentlichen zylindrischen äußeren Mantelfläche versehen, an die sich die jeweiligen Teilschalen anlegen lassen. In dem vorzugsweise hohl ausgebildeten Walzenkörper können beispielsweise Ausnehmungen mit Gewinde zwecks Verschrauben der Teilschalen mit dem Walzenkörper angeordnet sein. Die Befestigungsmittel können die jeweilige Teilschale jeweils in den in Umfangsrichtung betrachteten Endbereichen befestigen. Sie können alternativ oder ergänzend auch zwischen den jeweiligen Endbereichen einer jeweiligen Teilschale angeordnet sein, je nach Ausbildung und Festigkeit bzw. Biegesteifigkeit der Teilschale. Durch die Befestigung mit den Befestigungsmitteln werden während des Betriebs aufgrund der Rotation entstehenden Fliehkräfte, die auf die Teilschalen wirken, abgefangen und Antriebsmomente vom Walzenkörper übertragen.

Vorzugsweise decken die Teilschalen den Walzenkörper in Umfangsrichtung vollständig ab und umschließen diesen insgesamt. Alternativ können die Teilschalen auch nur segmentförmig in jeweiligen Abschnitten in Umfangsrichtung auf dem Walzenkörper nacheinander angeordnet sein und so mit Abstand aufeinander in Umfangsrichtung folgen. Es versteht sich, dass als vollständiges Umschließen sowohl ein teilweises Überlappen als auch ein bis auf etwaige Spaltmaße dicht aneinander angeordnetes Abfolgen der Teilschalen in Umfangsrichtung verstanden wird. Vorzugsweise sind zumindest 90 %, vorzugsweise zumindest 95 % und insbesondere 100 % des Umfangs des Walzenkörpers im Bereich der Teilschalen durch diese abgedeckt.

Erfindungsgemäß sind die Teilschalen in Richtung quer zur Längsmittelachse betrachtet mittig zwischen äußeren, am Walzenkörper fest angeordneten Festwerkzeugen angeordnet. Die Teilschalen können so in einem Zentralbereich der Walze angeordnet sein, wobei auf dem Walzenkörper außerhalb dieses Zentralbereichs insbesondere zu den Seiten hin weitere Festwerkzeuge in Form von Arbeitswerkzeugen vorhanden sein, die dann allerdings nicht lösbar und fest mit dem Walzenkörper verbunden sind. So können lediglich die typischerweise bei einer Walze oder einer Fördervorrichtung entsprechend hoch belasteten Zentralbereiche mit austauschbaren Teilschalen versehen sein, während typischerweise nicht so hoch belastete Seitenbereiche mit fest auf dem Walzenkörper versehenen Arbeitswerkzeugen ausgestattet sind.

Eine besonders einfache Auswechslung der Teilschalen ist dann realisiert, wenn diese als Halbschalen ausgebildet sind. So ist eine erfindungsgemäße Walze, die insbesondere einen Durchmesser von nicht mehr als 40 cm aufweist, leicht wechselbar. Durch die große Anlagefläche ist das Lösen und das Montieren der Teilschalen erleichtert.

Gemäß einer weiteren Ausgestaltung der Erfindung sind auf dem Walzenkörper in Richtung quer zur Längsmittelachse betrachtet eine Mehrzahl von entlang der Längsmittelachse nebeneinander angeordneten Teilschalen angeordnet. So können einzelne Bereiche eines beispielsweise hoch belasteten Mittelbereichs einer Fördervorrichtung gezielter ausgetauscht werden. In einer solchen Ausbildung der Erfindung sind in Längsrichtung der Längsmittelachse somit zwei Teilschalen hintereinander angeordnet und insgesamt vier Teilschalen minimal auf einer Walze vorhanden.

Insbesondere sind zumindest zwei der Teilschalen über das zumindest eine Befestigungsmittel aneinander befestigt. Das oder die Befestigungsmittel können die Teilschalen mittelbar am Walzenkörper dahingehend festlegen, dass beispielsweise die Schalen lediglich auf den Walzenkörper festgeklemmt werden, indem die Befestigungsmittel als Spannmittel ausgebildet sind, welche die jeweiligen Teilschalen gegeneinander und damit dann auch auf dem Walzenkörper verspannen. Sie können auch unmittelbar wie vorbeschrieben beispielsweise zur Festlegung am Walzenkörper dienen.

Vorzugsweise umfassen die Befestigungsmittel wenigstens ein zumindest eine Ausnehmung des Walzenkörpers durchgreifendes Spannelement, über das zwei Teilschalen gegeneinander und insbesondere gegen den Walzenkörper verspannt sind. Hierdurch kann die Drehmomentübergabe vom Walzenkörper auf die Teilschalen besonders gut erfolgen. Besonders bevorzugt durchgreift ein Spannelement zwei Ausnehmungen des Walzenkörpers, so dass etwaige Drehmomente verteilt auf die Teilschalen übertragen werden können. Die Mehrzahl von Befestigungsmitteln sind insbesondere bei einer Ausbildung der Spannelemente als Gewindestangen oder Schrauben besonders vorteilhaft auch dahingehend, dass endseitig an der Gewindestange bzw. Schraube befindliche Schraubenmuttern und Schraubköpfe nach der Befestigung der Teilschalen nach außen überstehen können und somit bei einem Festsitzen aufgrund von Korrosion oder anderer Verschmutzung einfach abgeschert werden können, so dass die Teilschalen dann ohne eine Beschädigung des Walzenkörpers entfernt werden können. Ein Freibohren etwaiger Gewinde, die im Walzenkörper angeordnet wären, entfällt damit.

Die Befestigung der Teilschalen ist dann verbessert und vereinfacht, wenn diese in Umfangsrichtung überlappende Endbereiche aufweisen, die mittels der Befestigungsmittel miteinander und/oder gegen die Außenoberfläche des Walzenkörpers verspannt sind.

Vorzugsweise ist somit eine erfindungsgemäße Weiterbildung einer Walze mit zwei Halbschalen versehen, die entlang der Längsrichtung mit zwei oder mehr Befestigungsmitteln, insbesondere Gewindestangen oder Schrauben, an dem Walzenkörper befestigt sind. Die Befestigung erfolgt vorzugsweise jeweils im Endbereich bzw. Übergangsbereich der Halbschalen zueinander, so dass pro Befestigungspunkt jeweils nur eine Gewindestange oder Schraube mittig durch den Walzenkörper geführt werden muss, um entsprechend als Halbschalen ausgebildete Teilschalen sicher festzulegen. Ein Spannelement verspannt dann auf voneinander weg gerichteten Oberflächenbereichen des Walzenkörpers jeweils einen Endbereich der beiden Halbschalen gegeneinander und gegen den Walzenkörper.

Vorteilhafterweise ist der Walzenkörper im Anlagebereich für die Teilschalen mit einer profilierten Oberfläche versehen, die mit einer Oberfläche zumindest einer der Teilschalen korrespondiert und somit zusätzlich zu einer Drehmomentübertragung beiträgt. Alternativ oder ergänzend ist die Oberfläche im Anlagebereich für die Teilschalen, d.h. in dem Bereich, in dem die Oberflächen der Teilschalen an der Oberfläche des Walzenkörpers anliegen, glatt ausgebildet.

Die äußere Mantelfläche der Teilschalen weist vorzugsweise einen größeren Abstand von der Längsmittelachse auf als die äußere Mantelfläche des nicht von einer Teilschale abgedeckten Walzenkörpers, wobei hier etwaige Arbeitswerkzeuge und deren Erhebung über der äußeren Manteloberfläche unbeachtet bleiben. So kann beispielsweise ein aus Stahl gefertigter Walzenkörper mittig mit einfach auf diesen Körper aufgesetzten Teilschalen ausgestattet sein, während im Bereich zu seinen Seiten hin, die im Rahmen einer Fördervorrichtung anzuordnen sind, etwaige Arbeitswerkzeuge in Form von Mitnahmerippen fest aufgeschweißt werden können. Die Herstellung einer erfindungsgemäßen Walze ist dann vereinfacht.

Alternativ oder ergänzend ist zumindest eine der Teilschalen in einem bezüglich eines benachbarten Bereichs zur Längsmittelachse hin versetzten Bereich des Walzenkörpers angeordnet. Die Teilschalen können in einem bezüglich eines Außenumfangs bezogen auf eine Längsmittelachse zurückspringenden Bereich des Walzenkörpers angeordnet sein, um einen möglichst geringen oder keinen Versatz in den Außenoberflächen der Teilschalen hin zu dem Rest der Außenoberfläche der Walze zu erhalten.

Die Festlegung ist weiterhin verbessert, wenn die Befestigungsmittel wenigstens eine in Längsrichtung, parallel zur Längsmittelachse verlaufende Schiene umfassen, mit der die Endbereiche gegen den Walzenkörper geklemmt werden, und die beispielsweise über das Spannelement bzw. eine zugehörige Schraubenmutter oder einen Schraubenkopf gegen die Teilschale und/oder den Walzenkörper befestigt werden. In Längsrichtung können mehrere Schienen pro Teilschale oder auch nur eine längere Schiene, deren Länge zumindest in etwa (=mindestens 80 %) der Länge der Teilschale entspricht, verwendet werden. Insbesondere ist bei einer solchen Ausbildung mit Schiene diese aus Metall gefertigt, während die Teilschalen aus einem Kunststoff- oder Gummimaterial gefertigt sind.

Insbesondere sind die Teilschalen aus einem Kunststoff, vorzugsweise aus einem Polyurethan einer Shore-Härte A zwischen 45 und 95, und/oder aus Stahl ausgebildet.

Die Anpassung an unterschiedliche Erntebedingungen kann über die Verwendung unterschiedlicher Shore-Härten und/oder unterschiedlicher Materialien erfolgen.

Sowohl in Varianten aus Stahl als auch aus Kunststoff kann die Walze mit zumindest einer einstückig mit dem weiteren Teil einer jeweiligen Teilschale ausgebildeten Mitnahmerippe als Arbeitswerkzeug versehen sein. Eine Mitnahmerippe ist oftmals mit einer verbreiterten Basis versehen, die zwecks Erhöhung der Elastizität der Mitnahmerippe nach oben hin sich verjüngt. Alternativ können ebenfalls auch Stege gleicher Breite Verwendung finden.

Für eine gute Förderwirkung ist eine Walze mit einer Mehrzahl von Mitnahmerippen versehen, bei der diese spiegelbildlich bzgl. einer quer zur Längsmittelachse verlaufenden Spiegelebene und insbesondere V-förmig zueinander um die Längsmittelachse verlaufen. Es kann sich auch um spiegelbildlich spiralförmig verlaufende Mitnahmerippen handeln.

An Stelle einer V-förmigen Ausbildung kann es sich auch um eine in Längsrichtung (parallel zur Längsmittelachse) erstreckende Profilleiste als Arbeitswerkzeug handeln. Durch diese wird eine besonders hohe Förderleistung erzeugt.

Die eingangs gestellte Aufgabe wird auch durch eine Fördervorrichtung für landwirtschaftliches Erntegut gelöst, insbesondere durch einen Walzentisch für einen Rüben- oder Kartoffelroder, der eine Mehrzahl von in einem Rahmen gehaltenen und mit parallelen Längsmittelachsen versehenen Walzen umfasst, von denen zumindest ein Teil wie vor- oder nachbeschrieben erfindungsgemäß ausgebildet ist. Entsprechend löst auch eine landwirtschaftliche Arbeitsmaschine, die eine erfindungsgemäße Fördervorrichtung aufweist, die eingangs gestellte Aufgabe.

Weitere Vorteile und Einzelheiten der Erfindung sind der nachfolgenden Figurenbeschreibung zu entnehmen. Schematisch dargestellt zeigt:

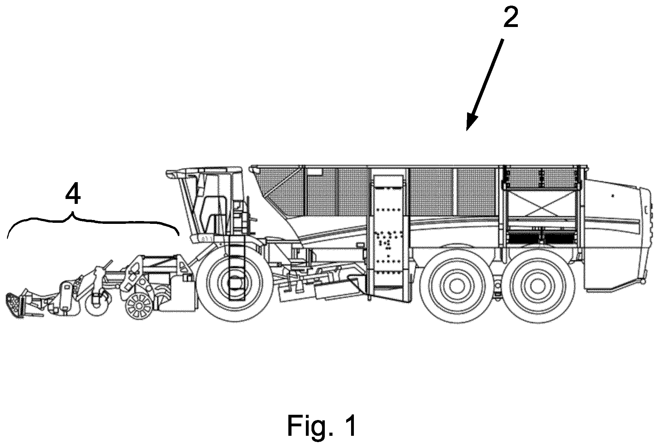

- Fig. 1: eine erfindungsgemäße Vorrichtung,
- Fig. 2: eine Teilansicht des Gegenstands nach Fig. 1 von oben,
- Fig. 3: eine Ansicht gemäß Fig. 2 eines weiteren erfindungsgemäßen Gegenstands,
- Fig. 4a - bis 4h: weitere erfindungsgemäße Gegenstände,
- Fig. 5a: eine Ansicht entlang A-A nach Fig. 4a,
- Fig. 5b: eine Ansicht entlang B-B gemäß Fig. 4b,
- Fig. 6a und 6b: weitere, nicht erfindungsgemäße Gegenstände,
- Fig. 7: eine Teilschale des Gegenstands nach Fig. 6b

Die nachfolgend erläuterten Merkmale der erfindungsgemäßen Ausführungsbeispiele können auch einzeln oder in anderen Kombinationen als dargestellt oder beschrieben Gegenstand der Erfindung sein, stets aber zumindest in Kombination mit den Merkmalen eines der unabhängigen Ansprüche. Sofern sinnvoll sind funktional gleichwirkende Teile mit identischen Bezugsziffern versehen.

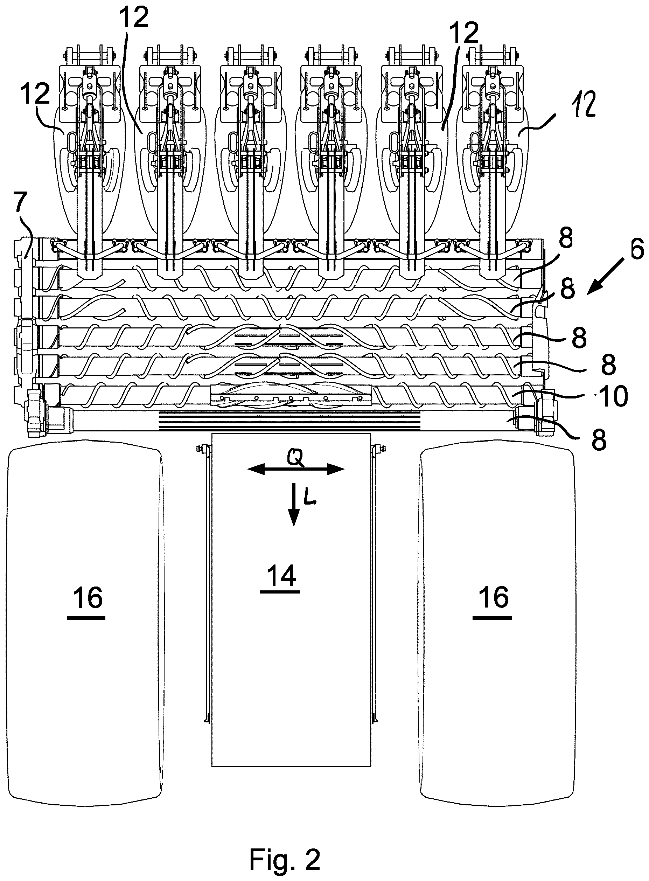

Eine erfindungsgemäße landwirtschaftliche Arbeitsmaschine ist beispielsweise als Rübenroder 2 ausgebildet mit einer Aufnahmeeinheit 4, über die Rüben und Beimengen insbesondere in Form von Erde während eines Feldbetriebes der erfindungsgemäßen Vorrichtung aufgenommen werden. Teil der Aufnahmeeinheit 4 ist eine als Walzentisch 6 ausgebildete Fördervorrichtung, die vorliegend fünf herkömmliche Walzen 8 und eine erfindungsmäße Walze 10 umfasst, die in einem Rahmen 7 gelagert sind. Der Walzentisch 6 stellt eine Förderstrecke dar, die zwischen den als Aufnahme fungierenden Rodescharen 12 und einer weiteren Überleitvorrichtung 14, die zwischen zwei Vorderrädern 16 des Rübenroders 2 angeordnet ist (Fig. 2).

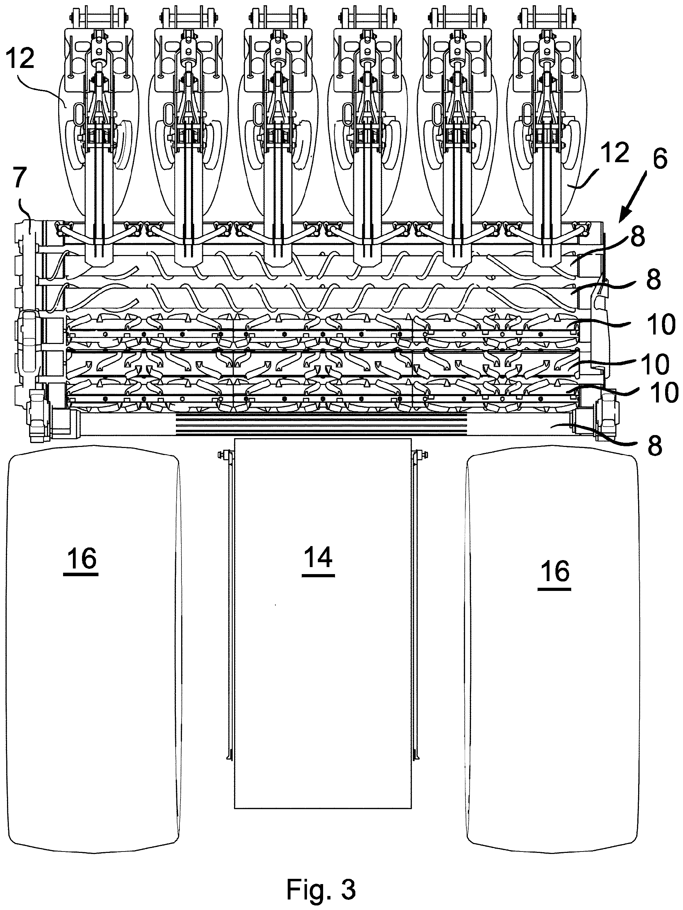

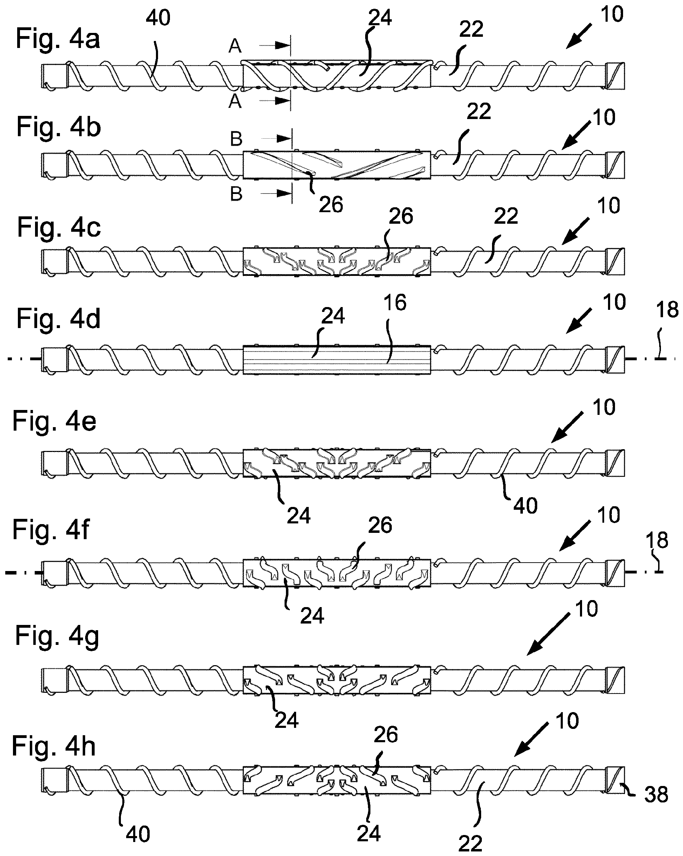

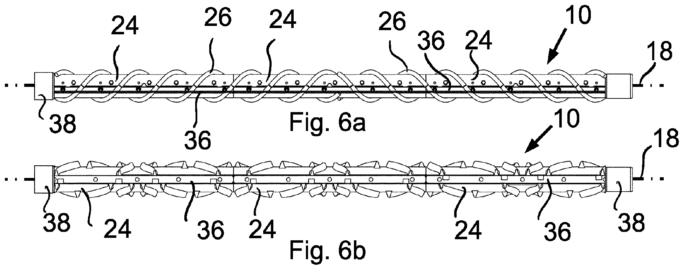

Ein weiterer erfindungsgemäßer Gegenstand nach Fig. 3 (in Teilansicht) umfasst einen weiteren erfindungsgemäßen Walzentisch 6, der drei herkömmliche Walzen 8 und 3 erfindungsgemäße Walzen 10 umfasst. Die erfindungsgemäßen Walzen 10 nach Fig. 3 unterscheiden sich von denjenigen nach Fig. 2 insbesondere dahingehend, dass die Walzen 10 nach Fig. 3 jeweils sechs Teilschalen aufweisen, die in der Ansichtsebene nach Fig. 3 jeweils paarweise über fast die gesamte Länge der jeweiligen Walze 10 nebeneinander angeordnet sind, während die erfindungsgemäße Walze 10 nach Fig. 2 lediglich in einem mittleren Abschnitt, der in etwa der Breite der Überleitvorrichtung 14 entspricht, zwei als Halbschalen ausgebildete Teilschalen aufweist. Die unterschiedliche Ausbildung der erfindungsgemäßen Walzen 10 nach den Fig. 2 und 3, die in den Varianten nach den Fig. 4a - h bzw. 6a und 6b enthalten sind, ermöglichen die Anpassung des Walzentisches 6 an unterschiedliche Erntebedingungen.

Darüber hinaus ist insbesondere die Walze 10 nach Fig. 2 in einem Bereich angeordnet, in dem ein sehr großer Anteil des Volumenstroms während der Ernte gefördert wird. Die Walzen 8, die zu den Rodescharen 12 angeordnet sind, transportieren das über die gesamte Breite der Aufnahmeeinheit 4 eingesammelte Erntegut zur Mitte hin, so dass die erfindungsgemäße Walze 10 gerade im mittleren Bereich, der sich unmittelbar vor der Überleitvorrichtung 14 befindet, am stärksten belastet wird. Durch die einfache Austauschbarkeit der als Halbschalen ausgebildeten Teilschalen der erfindungsgemäßen Walze 10 ist ein schneller Austausch bei Verschleiß bzw. geänderten Erntebedingungen möglich.

Ein Walzentisch 6 kann ein oder mehrere erfindungsgemäße Walzen 10 aufweisen bzw. vollständig mit erfindungsgemäßen Walzen 10 bestückt sein. Diese Walzen 10 können gemäß den Fig. 4a - 4h ausgebildet sein, wobei durch die Ausführung der Arbeitswerkzeuge sowohl eine Querförderung in Richtung des Doppelpfeils Q als auch eine Vorwärtsförderung in Längsrichtung des Pfeils L beeinflusst wird.

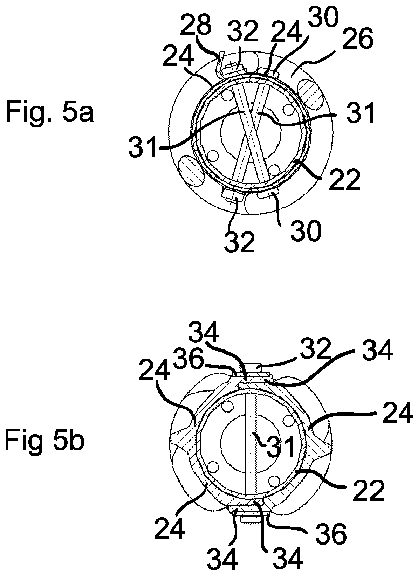

Die Varianten gemäß der Fig. 4a bis 4h weisen die Gemeinsamkeit auf, dass jeweils mittig auf einen Walzenkörper 22 diesen umschließend nur zwei Teilschalen 24 in Form von Halbschalen angeordnet sind. Die Halbschalen des Ausführungsbeispiels nach den Fig. 4a und Fig. 5a sowie die auf diesen Halbschalen angeordneten Mitnahmerippen 26 sind aus Stahl gefertigt und miteinander verschweißt. Zusätzlich ist ebenfalls als Arbeitswerkzeug eine Profilleiste 28 über nachfolgend noch beschriebene Befestigungsmittel, über die auch die Teilschalen 24 an dem Walzenkörper 22 angeordnet sind, festgelegt. Festwerkzeuge 40 der jeweiligen Walzenkörper 22 sind fest mit diesen verbunden.

Die Teilschalen 24 sind über in Längsrichtung betrachtet versetzt zueinander angeordnete Befestigungsmittel auf dem Walzenkörper 22 festgelegt (Fig. 5a). Die Befestigungsmittel umfassen eine endseitig mit einem Kopf 30 versehene Schraube 31, die mittels einer Schraubenmutter 32 die Teilschalen 24 gegen den Walzenkörper 22 und somit mittelbar auch gegeneinander verspannen. Zusätzlich ist die Profilleiste 28 mittels einer der beiden Schraubenmuttern 32 auf der in der Figur im Wesentlichen linken Teilschale 24 festgelegt.

Die Schrauben 31 greifen durch Ausnehmungen des Walzenkörpers 22 hindurch und übertragen insofern sicher ein in den Walzenkörper 22 eingeleitetes Drehmoment, welches auf herkömmliche Art und Weise mittels eines bekannten Antriebs des Walzentisches 6 erzeugt wird.

Während die Teilschalen 24 nach Fig. 5a dicht in Umfangsrichtung aufeinanderfolgen und sich nicht überlappen, gilt dies für die im Wesentlichen aus einem Polyurethan hergestellten Teilschalen 24 nach Fig. 5b nicht. Die Teilschalen 24 nach Fig. 5b weisen überlappende Endbereiche 34 auf, die durch die Schraube 31 und deren Kopf bzw. die dann endseitig angeordnete Schraubenmutter 32 gegeneinander und gegen den Walzenkörper 22 verspannt bzw. verklemmt werden. Um einen möglichst gleichmäßigen Andruck über die gesamte Länge der in gewissem Maß flexiblen Teilschalen 24 zu erzeugen, sind die Überlappungsbereiche durch eine in Richtung der Längsmittelachsen 18 verlaufende Schiene 36 verklemmt. Die Schiene verteilt somit als Klemmelement die über die Schraubenmuttern bzw. Gewindestangen aufgebrachten Kräfte über die Längserstreckung einer jeweiligen Teilschale (vergl. auch Fig. 6a und 6b).

Die Ausführungsbeispiele nach den Fig. 6a und 6b weisen jeweils sechs Teilschalen 24 auf, die über einen Großteil der Länge der jeweiligen Walze 10 den Walzenkörper 22 bedecken. Lediglich zum Rahmen hin angeordnete Enden 38 der Walzenkörper 22 sind nicht bedeckt. Bei beiden Walzen 10 werden die aus Polyurethan gefertigten Teilschalen nicht nur über die Schrauben 31 sondern auch über Schienen 36 an den Walzenkörper geklemmt, die von mehreren Spannmitteln gegen die Teilschalen 24 gezogen bzw. gespannt werden. Die Teilschalen 24 der Ausführungsbeispiele nach den Fig. 6a und 6b sind aus Polyurethan einer Shore-Härte A zwischen 45 und 95 gefertigt. Die Mitnahmerippen 26 können bezüglich einzelner Teilabschnitte oder auch über größere Längen der jeweiligen Walze 10 bezüglich einer quer zur Längsachse 18 verlaufenden Spiegelachse bzw. -fläche abschnittsweise symmetrisch zueinander angeordnet sein. Während im Ausführungsbeispiel nach der Fig. 6a die Mitnahmerippen 26 einen Transport des Materials sowohl in Hauptförderrichtung als auch quer zur Mitte hin der Walze bewirken, ist bei der Variante nach Fig. 6b eine stärkere Reinigungswirkung durch ein stärkeres Anheben einzelner Teile des Ernteguts zu erwarten.

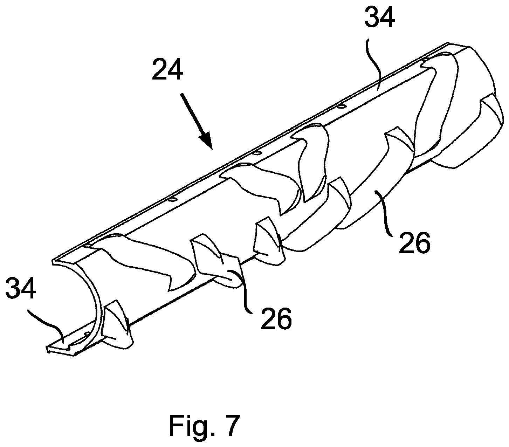

Eine Teilschale nach der Walze 10 gemäß Fig. 6b ist in der Detailansicht nach Fig. 7 noch einmal offenbart. Diese ist identisch aufgebaut zu der weiteren Teilschale, mit der (vergl. Fig. 5b) dann eine vollständige Abdeckung in Umfangsrichtung des jeweiligen Walzenkörpers 22 erfolgt. Dies vereinfacht wiederum die Anordnung und Herstellung der erfindungsgemäßen Walzen 10.

## Patentansprüche

1. Walze für eine landwirtschaftliche Fördervorrichtung für Erntegut, umfassend einen längsgestreckten Walzenkörper (22), dessen Längsmittelachse (18) im Betrieb einer Rotationsachse der Walze (10) entspricht, sowie umfassend ein relativ zum Walzenkörper (22) lösbar festgelegtes Arbeitswerkzeug zur Einwirkung auf das Erntegut, wobei die Arbeitswerkzeuge auf zumindest zwei den Walzenkörper (22) in Umfangsrichtung bedeckenden und aufeinanderfolgenden Teilschalen (24) angeordnet sind, die über zumindest ein Befestigungsmittel lösbar am Walzenkörper (22) festgelegt sind, **dadurch gekennzeichnet, dass** die Teilschalen (24) in Richtung quer zur Längsmittelachse (18) betrachtet mittig zwischen äußeren, am Walzenkörper (22) fest angeordneten Festwerkzeugen (40) angeordnet sind.

2. Walze nach Anspruch 1, **dadurch gekennzeichnet, dass** die Teilschalen (24) den Walzenkörper (22) in Umfangsrichtung vollständig umschließen.

3. Walze nach Anspruch 1 oder 2, **dadurch gekennzeichnet, dass** die Teilschalen (24) als Halbschalen ausgebildet sind.

4. Walze nach einem der vorherigen Ansprüche, **dadurch gekennzeichnet, dass** auf dem Walzenkörper (22) in Richtung quer zur Längsmittelachse (18) betrachtet eine Mehrzahl von entlang der Längsmittelachse (18) nebeneinander angeordneten Teilschalen angeordnet sind.

5. Walze nach einem der vorherigen Ansprüche, **dadurch gekennzeichnet, dass** zumindest zwei der Teilschalen (24) über das zumindest eine Befestigungsmittel aneinander befestigt sind.

6. Walze nach einem der vorherigen Ansprüche und mit einer Mehrzahl von Befestigungsmitteln, **dadurch gekennzeichnet, dass** die Befestigungsmittel wenigstens ein zumindest eine Ausnehmung des Walzenkörpers (22) durchgreifendes Spannelement umfassen, über das zwei Teilschalen (24) gegeneinander und insbesondere gegen den Walzenkörper (22) verspannt sind.

7. Walze nach einem der vorherigen Ansprüche, **dadurch gekennzeichnet, dass** der Walzenkörper (22) im Anlagebereich für die Teilschalen (24) eine profilierte Oberfläche, die mit einer Oberfläche zumindest einer der Teilschalen (24) korrespondiert, aufweist und/oder glatt ausgebildet ist.

8. Walze nach einem der vorherigen Ansprüche, **dadurch gekennzeichnet, dass** die äußere Mantelfläche der Teilschalen (24) einen größeren Abstand von der Längsmittelachse (18) aufweist als die äußere Mantelfläche des nicht von einer Teilschale (24) abgedeckten Walzenkörpers (22).

9. Walze nach einem der vorherigen Ansprüche, **dadurch gekennzeichnet, dass** die Teilschalen (24) in Umfangsrichtung überlappende Endbereiche (38) aufweisen, die mittels des wenigstens einen Befestigungsmittels miteinander verspannt sind.

10. Walze nach einem der vorherigen Ansprüche, **dadurch gekennzeichnet, dass** die Befestigungsmittel wenigstens eine in Längsrichtung parallel zur Längsmittelachse verlaufende Schiene, mit der die Endbereiche gegen den Walzenkörper geklemmt werden, umfassen.

11. Walze nach einem der vorherigen Ansprüche, **dadurch gekennzeichnet, dass** zumindest eine der Teilschalen (24) in einem bezüglich eines benachbarten Bereichs zur Längsmittelachse (18) hin versetzen Bereich des Walzenkörpers (22) angeordnet ist.

12. Walze nach einem der vorherigen Ansprüche, **dadurch gekennzeichnet, dass** die Teilschalen (24) aus einem Kunststoff, vorzugsweise einem Polyurethan einer Shore-Härte A zwischen 45 - 95, und/oder aus Stahl ausgebildet sind.

13. Walze nach einem der vorherigen Ansprüche, **dadurch gekennzeichnet, dass** die Walze (10) mit zumindest einer einstückig mit einer jeweiligen Teilschale (24) ausgebildeten Mitnahmerippe (26) als Arbeitswerkzeug versehen ist.

14. Walze nach einem der vorherigen Ansprüche und mit einer Mehrzahl von Mitnahmerippen (26), **dadurch gekennzeichnet, dass** diese spiegelbildlich und insbesondere V-förmig zueinander um die Längsmittelachse (18) verlaufen.

15. Walze nach einem der vorherigen Ansprüche, **gekennzeichnet durch** eine in Längsrichtung verlaufende Profilleiste (28) als Arbeitswerkzeug.

16. Fördervorrichtung für landwirtschaftliches Erntegut, insbesondere Walzentisch (6) für einen Rübenroder (2), umfassend eine Mehrzahl von in einem Rahmen (7) gehaltenen und mit parallelen Längsmittelachsen (18) versehenen Walzen (8, 10), **dadurch gekennzeichnet, dass** zumindest ein Teil der Walzen (10) nach einem der vorherigen Ansprüche ausgebildet ist.

17. Landwirtschaftliche Arbeitsmaschine umfassend eine Fördervorrichtung nach Anspruch 16.

## Claims

1. Roller for an agricultural conveyor device for harvested crop, comprising an elongated roller body (22), the longitudinal midaxis (18) of which corresponds during operation to an axis of rotation of the roller (10), and comprising a working tool releasably fixed relative to the roller body (22) for acting on the harvested crop, wherein the working tools are arranged on at least two successive partial shells (24) that cover the roller body (22) in the circumferential direction and are releasably fixed to the roller body (22) via at least one fastening means, **characterized in that** the partial shells (24) are arranged centrally, as seen in a direction transverse to the longitudinal midaxis (18), between outer fixed tools (40) that are arranged firmly on the roller body (22).

2. Roller according to Claim 1, **characterized in that** the partial shells (24) fully enclose the roller body (22) in the circumferential direction.

3. Roller according to Claim 1 or 2, **characterized in that** the partial shells (24) are configured as half shells.

4. Roller according to one of the preceding claims, **characterized in that** a plurality of partial shells arranged next to one another along the longitudinal midaxis (18) are arranged on the roller body (22), as seen in a direction transverse to the longitudinal midaxis (18).

5. Roller according to one of the preceding claims, **characterized in that** at least two of the partial shells (24) are fastened to one another via the at least one fastening means.

6. Roller according to one of the preceding claims and having a plurality of fastening means, **characterized in that** the fastening means comprise at least one bracing element that engages through at least one recess of the roller body (22) and via which two partial shells (24) are braced against one another and in particular against the roller body (22).

7. Roller according to one of the preceding claims, **characterized in that** the roller body (22) has a profiled surface in the bearing region for the partial shells (24), which corresponds with a surface of at least one of the partial shells (24), and/or is smoothly configured.

8. Roller according to one of the preceding claims, **characterized in that** the outer lateral face of the partial shells (24) is at a greater distance from the longitudinal midaxis (18) than the outer lateral face of the roller body (22) that is not covered by a partial shell (24).

9. Roller according to one of the preceding claims, **characterized in that** the partial shells (24) have end regions (38) that overlap in the circumferential direction and which are braced with one another by the at least one fastening means.

10. Roller according to one of the preceding claims, **characterized in that** the fastening means comprise at least one rail that runs in a longitudinal direction parallel to the longitudinal midaxis and with which the end regions are clamped against the roller body.

11. Roller according to one of the preceding claims, **characterized in that** at least one of the partial shells (24) is arranged in a region of the roller body (22) that is offset towards the longitudinal midaxis (18) in relation to a neighbouring region.

12. Roller according to one of the preceding claims, **characterized in that** the partial shells (24) are formed from a plastic, preferably a polyurethane with a Shore A hardness of between 45 - 95, and/or from steel.

13. Roller according to one of the preceding claims, **characterized in that** the roller (10) is provided with at least one carrier rib (26), formed integrally with a respective partial shell (24), as a working tool.

14. Roller according to one of the preceding claims and having a plurality of carrier ribs (26), **characterized in that** the latter run mirror-symmetrically and particularly in a V-shaped manner with respect to one another around the longitudinal midaxis (18).

15. Roller according to one of the preceding claims, **characterized by** a profiled strip (28) running in the longitudinal direction as a working tool.

16. Conveyor device for agricultural harvested crop, in particular roller table (6) for a beet harvester (2), comprising a plurality of rollers (8, 10) that are held in a frame (7) and provided with parallel longitudinal midaxes (18), **characterized in that** at least some of the rollers (10) are configured according to one of the preceding claims.

17. Agricultural machine comprising a conveyor device according to Claim 16.

## Revendications

1. Rouleau destiné à un dispositif agricole de convoyage de récoltes, ledit rouleau comprenant un corps de rouleau allongé (22) dont l'axe central longitudinal (18) correspond en fonctionnement à un axe de rotation du rouleau (10), et comprenant un outil de travail qui est fixé de manière amovible par rapport au corps de rouleau (22) et qui est destiné à agir sur la récolte, les outils de travail étant disposés sur au moins deux parties de coque successives (24) qui recouvrent le corps de rouleau (22) dans la direction circonférentielle et qui sont fixées de manière amovible au corps de rouleau (22) par le biais d'au moins un moyen de fixation, **caractérisé en ce que**, par référence à la direction transversale à l'axe central longitudinal (18), les parties de coque (24) sont disposées centralement entre des outils fixes extérieurs (40) qui sont disposés de manière fixe sur le corps de rouleau (22).

2. Rouleau selon la revendication 1, **caractérisé en ce que** les parties de coque (24) enferment complètement le corps de rouleau (22) dans la direction circonférentielle.

3. Rouleau selon la revendication 1 ou 2, **caractérisé en ce que** les parties de coque (24) sont conçues sous la forme de demi-coques.

4. Rouleau selon l'une des revendications précédentes, **caractérisé en ce que**, par référence à la direction transversale à l'axe central longitudinal (18), une pluralité de parties de coque, placées les unes à côté des autres le long de l'axe central longitudinal (18), sont disposées sur le corps de rouleau (22).

5. Rouleau selon l'une des revendications précédentes, **caractérisé en ce qu'**au moins deux des parties de coque (24) sont fixées l'une à l'autre par le biais d'au moins un moyen de fixation.

6. Rouleau selon l'une des revendications précédentes, pourvu d'une pluralité de moyens de fixation, **caractérisé en ce que** les moyens de fixation comprennent au moins un élément de serrage qui s'engage à travers au moins un évidement du corps de rouleau (22) et qui permet de serrer deux parties de coque (24) l'une contre l'autre et notamment contre le corps de rouleau (22).

7. Rouleau selon l'une des revendications précédentes, **caractérisé en ce que** le corps de rouleau (22) comporte dans la zone de contact des parties de coque (24) une surface profilée qui correspond à une surface d'au moins une des parties de coque (24), qui comporte celle-ci et/ou qui est conçue pour être lisse.

8. Rouleau selon l'une des revendications précédentes, **caractérisé en ce que** la surface latérale extérieure des parties de coque (24) est à une plus grande distance de l'axe central longitudinal (18) que la surface latérale extérieure du corps de rouleau (22) qui n'est pas recouvert par une partie de coque (24).

9. Rouleau selon l'une des revendications précédentes, **caractérisé en ce que** les parties de coque (24) comportent des zones d'extrémité (38) qui se chevauchent dans la direction circonférentielle et qui sont serrées ensemble à l'aide de l'au moins un moyen de fixation.

10. Rouleau selon l'une des revendications précédentes, **caractérisé en ce que** les moyens de fixation comprennent au moins une glissière qui s'étend dans la direction longitudinale parallèlement à l'axe central longitudinal et qui permet de serrer les zones d'extrémité contre le corps de rouleau.

11. Rouleau selon l'une des revendications précédentes, **caractérisé en ce qu'**au moins une des parties de coque (24) est disposée dans une zone du corps de rouleau (22) qui est décalée vers l'axe central longitudinal (18) par rapport à une zone adjacente.

12. Rouleau selon l'une des revendications précédentes, **caractérisé en ce que** les parties de coque (24) sont en une matière synthétique, de préférence en polyuréthane d'une dureté Shore A comprise entre 45 et 95, et/ou en acier.

13. Rouleau selon l'une des revendications précédentes, **caractérisé en ce que** le rouleau (10) est pourvu d'au moins une nervure d'entraînement (26) formée d'une seule pièce avec une partie de coque respective (24) et servant d'outil de travail.

14. Rouleau selon l'une des revendications précédentes, pourvu d'une pluralité de nervures d'entraînement (26), **caractérisé en ce que** celles-ci s'étendent en miroir et notamment en forme de V les unes par rapport aux autres autour de l'axe central longitudinal (18).

15. Rouleau selon l'une des revendications précédentes, **caractérisé par** une bande profilée (28) s'étendant dans la direction longitudinale et servant d'outil de travail.

16. Dispositif de convoyage de récoltes agricoles, notamment table à rouleaux (6) destinée à une arracheuse de betteraves (2), ledit dispositif de convoyage comprenant une pluralité de rouleaux (8, 10) maintenus dans un cadre (7) et pourvus d'axes centraux longitudinaux parallèles (18), **caractérisé en ce qu'**au moins une partie des rouleaux (10) sont conçus selon l'une des revendications précédentes.

17. Machine de travail agricole comprenant un dispositif de convoyage selon la revendication 16.
